# EUROPÄISCHE PATENTSCHRIFT

(11) **EP 2 590 141 B1**
(45) Veröffentlichungstag und Bekanntmachung des Hinweises auf die Patenterteilung: **02.01.2019**
(21) Anmeldenummer: 12007342.4
(22) Anmeldetag: 26.10.2012
(51) Int. Cl.: G06T 7/20, G06T 7/254

(54) **Verfahren und Vorrichtung zur Detektion bewegter Objekte in einer Videobildsequenz**
Method and device for detecting moving objects in a video picture sequence
Procédé et dispositif de détection d'objets en mouvement dans une séquence vidéo

(30) Priorität: 02.11.2011 DE 102011117408
(43) Veröffentlichungstag der Anmeldung: 08.05.2013
(73) Patentinhaber: Airbus Defence and Space GmbH, 85521 Ottobrunn (DE)
(72) Erfinder: Leuck, Holger, D-85764 Oberschleißheim (DE); Stahl, Christoph, D-85123 Karlskron (DE); Seidel, Heiko, D-85290 Geisenfeld (DE)
(74) Vertreter: Frenkel, Matthias Alexander

(56) Entgegenhaltungen:
- WO-A2-91/12584
- WO-A2-2007/147105
- DE-A1- 19 601 005
- DE-A1-102009 017 135
- BUGEAU A ET AL: "Detection and segmentation of moving objects in complex scenes", COMPUTER VISION AND IMAGE UNDERSTANDING, ACADEMIC PRESS, US, Bd. 113, Nr. 4, 1. April 2009 (2009-04-01) , Seiten 459-476, XP026002814, ISSN: 1077-3142, DOI: 10.1016/J.CVIU.2008.11.005 [gefunden am 2008-12-11]

## Beschreibung

Die vorliegende Erfindung betrifft die Detektion bewegter Objekte in einer Videobildsequenz, insbesondere ein Verfahren umfassend die Schritte:
a) Ermittlung von markanten Merkmalspunkten in einem Bild eines Paares von aufeinanderfolgenden Bildern der Videobildsequenz,
b) Ermittlung einer mathematischen Transformation zur Abbildung eines der beiden Bilder des Bildpaares auf das andere der beiden Bilder des Bildpaares, unter Verwendung der in Schritt a) ermittelten markanten Merkmalspunkte,
c) Ermittlung eines Differenzbildes als eine Differenz zwischen den mittels der in Schritt b) ermittelten Transformation aufeinander transformierten Bilder des Bildpaares,
d) Ermittlung von markanten Bildänderungspunkten in dem in Schritt c) ermittelten Differenzbild,
e) Ermittlung von Objektpunkten aus den in Schritt d) ermittelten markanten Bildänderungspunkten.

Derartige Verfahren sind beispielsweise aus dem Stand der Technik zur Detektion bewegter Objekte in Kamerabildsequenzen einer an Bord eines Flugzeuges installierten Schwenk-Neige-Kamera bekannt. Die Detektion geschieht hierbei mithilfe einer so genannten Änderungsdetektion ("change detection"), bei welcher zeitlich aufeinanderfolgende Videobilder der Kamerabildsequenz miteinander verglichen und auftretende Bildveränderungen ermittelt werden. Aus den ermittelten Bildveränderungen können sodann in Echtzeit das oder die in der aufgenommenen Szenerie bewegten Objekte ermittelt werden.

Hinsichtlich der Zuverlässigkeit bzw. Qualität der bekannten Detektionsverfahren ergeben sich insbesondere folgende Probleme:
Falls sich im Laufe der betreffenden Videobildsequenz der aufgenommene "Bildausschnitt" als solcher verändert, wie dies beispielsweise bei einer sich bewegenden und/oder schwenkenden und/oder neigenden Kamera durch die damit verbundenen Veränderungen von Blickwinkel und/oder Beobachtungsdistanz der Fall ist (z. B. bei Verwendung einer Bildsensoreinrichtung an Bord eines Fahrzeuges, insbesondere Luftfahrzeuges), so müssen die allein hieraus resultierenden Bildänderungen zunächst kompensiert werden, was auch als "Bildregistrierung" bezeichnet wird. Bei dieser Bildregistrierung können in den bekannten Verfahren jedoch erhebliche Ungenauigkeiten auftreten. Dieses Problem betrifft vor allem die oben angegebenen Schritte a) bis c).

Außerdem können zeitliche Änderungen der Aufnahmebedingungen (z. B. Beleuchtung) wie auch in der Praxis ebenfalls nicht ganz vermeidbare Aufnahmeungenauigkeiten (z. B. durch Bildaufnahmerauschen, Kontrastausgleich etc.) die Zuverlässigkeit bzw. Qualität des Objektdetektionsverfahrens verschlechtern. Hierdurch können "Falschalarme", d.h. fälschliche Objektdetektionen verursacht werden.

DE 10 2009 017135 A1 beschreibt die Bestimmung von optischen Flussvektoren aus einer Bildvideosequenz, wobei die eigene Bewegung der Kamera durch Kreuzkorrelation kompensiert wird. Danach werden Bildpunkte, die zu sich bewegenden Objekten gehören, ermittelt, indem Differenzbilder zwischen aufeinanderfolgenden Bildern bestimmt und mit einem Schwellenwert verglichen werden.

A. Bugeau et al.: "Detection and segmentation of moving objects in complex scenes", COMPUTER VISION AND IMAGE UNDERSTANDING, ACADEMIC PRESS, US, Bd. 113, Nr. 4, 1. April 2009, Seiten 459-476 bezieht sich auf die Erkennung und Segmentierung von sich bewegenden Vordergrundsobjekten in komplexen Videoszenen.

Es ist daher eine Aufgabe der vorliegenden Erfindung, eine Objektdetektion der eingangs genannten Art möglichst robust gegenüber Störeinflüssen zu gestalten und hierbei insbesondere eine niedrige Falschalarmrate zu ermöglichen.

Gemäß eines ersten Aspekts der vorliegenden Erfindung wird diese Aufgabe durch ein Objektdetektionsverfahren nach Anspruch 1 gelöst. Die abhängigen Ansprüche sind auf vorteilhafte Weiterbildungen gerichtet. Gemäß dieses Erfindungsaspektes umfasst der Schritt d), also die Ermittlung von "markanten Bildänderungspunkten" in dem zuvor ermittelten Differenzbild, folgende Schritte:
d1) Festlegung eines Bildänderungsschwellwertes und Ermittlung von Bildänderungspunkten als diejenigen Stellen in dem in Schritt c) ermittelten Differenzbild, deren Bildhelligkeitsabsolutwert den Bildänderungsschwellwert überschreitet.
d2) Analyse der Qualität der im Schritt d1) ermittelten Bildänderungspunkte anhand wenigstens eines vorgegebenen Qualitätskriteriums,
d3) falls das Qualitätskriterium erfüllt ist, Festlegung der in Schritt d1) ermittelten Bildänderungspunkte als die im Schritt d) ermittelten markanten Bildänderungspunkte, sonst Wiederholung der Schritte d1) und d2) mit einem verändert festgelegten Bildänderungsschwellwert.

Die Grundidee dieser Verfahrensgestaltung besteht darin, bei der Ermittlung von markanten Bildänderungspunkten in dem zuvor ermittelten Differenzbild einen "adaptiven" Bildänderungsschwellwert vorzusehen, der zwar zunächst in irgendeiner Weise festgelegt wird, um auf dieser "versuchsweisen Basis" Bildänderungspunkte zu ermitteln, sodann jedoch diese anfängliche Festlegung bedarfsweise revidiert und eine neue Ermittlung der Bildänderungspunkte auf Basis eines verändert festgelegten Bildänderungsschwellenwertes wiederholt wird (falls ein vorgegebenes Kriterium nicht erfüllt wurde). Eine oder gegebenenfalls mehrere solche Wiederholungen der Schritte d1) und d2), mit dem Ziel einer Erfüllung (oder zumindest "besseren Erfüllung") des Qualitätskriteriums, ermöglichen vorteilhaft eine Verbesserung der Robustheit und eine Verringerung der Falschalarmrate der Objektdetektion.

Gemäß einer Ausführungsform, für welche die Anmelderin sich die Beanspruchung unabhängigen Schutzes (im Sinne eines unabhängigen zweiten Erfindungsaspektes) vorbehält, ist vorgesehen, dass der Schritt a) folgende Schritte umfasst:
a1) Detektion von Merkmalspunkten in einem der beiden Bilder des Bildpaares, jeweils in der Nähe von Gitterpunkten eines vorab festgelegten, über dieses Bild gelegten Gitters,
a2) Ermittlung der markanten Merkmalspunkte als eine Auswahl aus den in Schritt a1) detektierten Merkmalspunkten, unter Verwendung wenigstens eines vorgegebenen Auswahlkriteriums.

Gemäß einer Ausführungsform, für welche die Anmelderin sich die Beanspruchung unabhängigen Schutzes (im Sinne eines unabhängigen dritten Erfindungsaspektes) vorbehält, ist vorgesehen, dass der Schritt b) folgende Schritte umfasst:
b1) Ermittlung von Verschiebungsvektoren für jeden der in Schritt a) ermittelten markanten Merkmalspunkte durch Ermittlung der korrespondierenden markanten Merkmalspunkte in dem anderen der beiden Bilder des Bildpaares,
b2) Ermittlung von im Weiteren zu verwendenden Verschiebungsvektoren als eine Auswahl aus den in Schritt b1) ermittelten Verschiebungsvektoren, anhand wenigstens eines vorgegebenen Auswahlkriteriums,
b3) Berechnung der mathematischen Transformation auf Basis der in Schritt b2) ausgewählten Verschiebungsvektoren.

In einer Ausführungsform ist vorgesehen, dass der Schritt c) folgende Schritte umfasst:
c1) Anwendung der mathematischen Transformation zum Aufeinandertransformieren der beiden Bilder des Bildpaares,
c2) Ermittlung des Differenzbildes durch eine pixelweise Subtraktion von Bildhelligkeitswerten der beiden Bilder.

In einer Ausführungsform ist vorgesehen, dass der anfänglich in Schritt d1) festgelegte Bildänderungsschwellwert in Abhängigkeit von den im Differenzbild (tatsächlich) vorkommenden Bildhelligkeitswerten berechnet wird.

In einer Ausführungsform ist vorgesehen, dass in Schritt d2) als Qualitätskriterium verwendet wird, dass die Anzahl von Bildänderungspunkten in Form von isolierten Pixeln und/oder isolierten relativ kleinen zusammenhängenden Pixelbereichen im Differenzbild eine vorgegebene Maximalanzahl nicht übersteigt.

In einer Ausführungsform ist vorgesehen, dass ein oder mehrere im Rahmen des Objektdetektionsverfahrens verwendete Kriterien, insbesondere z. B. das in Schritt d2) verwendete Qualitätskriterium, durch eine Benutzereingabe veränderbar ist/sind.

In einer Ausführungsform ist vorgesehen, dass in Schritt e) die Objektpunkte jeweils als Bildbereiche von nahe beieinander liegenden der in Schritt d) ermittelten Bildänderungspunkte ermittelt werden.

Gemäß eines noch weiteren Aspekts der Erfindung ist eine Vorrichtung umfassend Mittel zur Durchführung eines Verfahrens der oben beschriebenen Art vorgesehen, insbesondere umfassend eine bildgebende Sensoreinrichtung zur Erzeugung der Videobildsequenz und eine programmgesteuerte Rechnereinrichtung zur Durchführung der Schritte a) bis e).

Eine bevorzugte Verwendung einer derartigen Vorrichtung bzw. des damit durchgeführten Objektdetektionsverfahrens ergibt sich für bemannte oder unbemannte Flugkörper, und hierbei insbesondere im Rahmen einer so genannten Zielerfassung bzw. Zielverfolgung.

Die Erfindung wird nachfolgend anhand eines Ausführungsbeispiels mit Bezug auf die beigefügten Zeichnungen weiter beschrieben. Es stellen dar:
- **Fig. 1**: ein Gesamtablaufdiagramm eines Detektionsverfahrens gemäß eines Ausführungsbeispiels,
- **Fig. 2**: ein beispielhaftes "erstes Bild" eines Paares von aufeinanderfolgenden Bildern einer mittels einer Kamera aufgenommenen Videobildsequenz, wobei die Positionen von ermittelten "Merkmalspunkten" mit eingezeichnet sind,
- **Fig. 3**: das "erste Bild" und ein "zweites Bild" des Bildpaares in einer kombinierten Darstellung, wobei aus paarweise einander zuordenbaren markanten Merkmalspunkten in den beiden Bildern ermittelte "Verschiebungsvektoren" mit eingezeichnet sind,
- **Fig. 4**: ein durch eine pixelweise Subtraktion von Grauwerten (der zuvor aufeinander transformierten Bilder) ermitteltes "Differenzbild",
- **Fig. 5**: ein binäres "Bildänderungsbild", zur Veranschaulichung einer Ermittlung von Bildänderungspunkten in dem Differenzbild, wobei ein für die Bildänderungsermittlung vorgegebenes Qualitätskriterium nicht erfüllt ist,
- **Fig. 6**: ein "Bildänderungsbild" ähnlich der Fig. 5, wobei jedoch (nach geeigneter Anpassung eines bei der Ermittlung der Bildänderungen verwendeten Bildänderungsschwellwertes) das vorgegebene Qualitätskriterium erfüllt wurde, und
- **Fig. 7**: das "zweite Bild" des Bildpaares mit einem darin als detektiertes "bewegtes Objekt" hervorgehobenen Bildbereich, dessen Position und Größe aus den markanten Bildänderungspunkten des gemäß Fig. 6 optimierten "Bildänderungsbildes" ermittelt wurden.

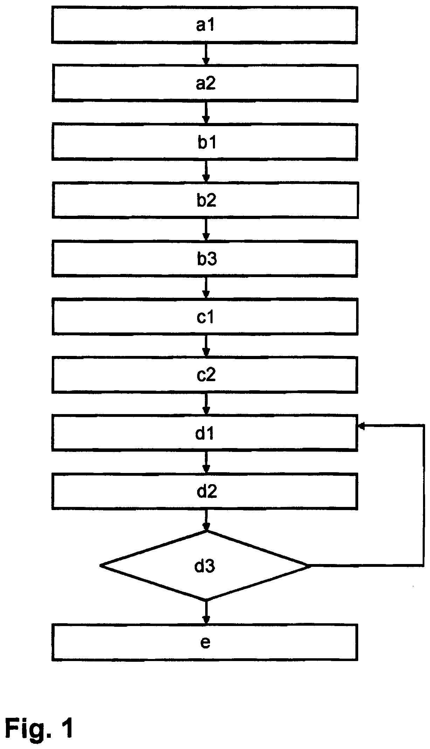

Fig. 1 zeigt ein Ablaufdiagramm eines Verfahrens zur Detektion bewegter Objekte gemäß eines Ausführungsbeispiels der Erfindung.

Die bei diesem Verfahren durchgeführten Schritte sind in der Figur mit a1), a2), b1), b2), b3), c1), c2), d1), d2), d3) und e) bezeichnet und werden nachfolgend im Einzelnen erläutert.

Die Schritte a1) und a2) bilden zusammen einen "Schritt a)" zur Ermittlung von markanten Merkmalspunkten in einem Bild eines Paares von aufeinanderfolgenden Bildern einer Videobildsequenz.

### Schritt a1): Detektion von Merkmalspunkten in einem der beiden Bilder des Bildpaares, jeweils in der Nähe von Gitterpunkten eines vorab festgelegten, über dieses Bild gelegten Gitters.

Der Begriff "Merkrmalspunkte" bezeichnet lokal begrenzte Bildbereiche, welche irgendwelche Bildstrukturen, also Bildhelligkeitsunterschiede enthalten.

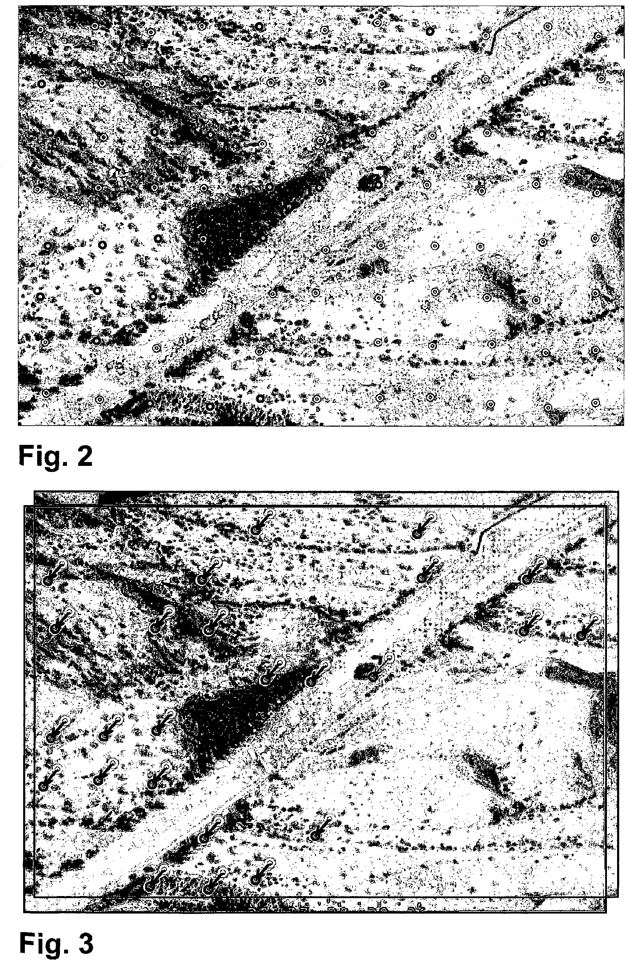

Fig. 2 veranschaulicht die Detektion von Merkmalspunkten in einem mittels einer flugzeugbasierten Kamera aufgenommenen Videobildes. Im Rahmen der Erfindung können prinzipiell Bilder von beliebigen bildgebenden Sensoren verarbeitet werden, unter anderem aber nicht beschränkt auf elektro-optische Sensoren von Licht im sichtbaren oder infraroten Spektralbereich.

Um zeitliche Änderungen in den Bildern einer Videobildsequenz detektieren zu können, werden mindestens zwei zeitlich (bevorzugt unmittelbar) aufeinanderfolgende Bilder benötigt. Im weiteren werden diese Bilder als ein "erstes Bild" (oder "vorangehendes" Bild) und als "zweites Bild" (oder "aktuelles" Bild) eines Bildpaares bezeichnet, für welches das erfindungsgemäße Detektionsverfahren ausgeführt wird. Der im Ablaufdiagramm von Fig. 1 veranschaulichte Ablauf wird dann bevorzugt für mehrere Bildpaare der Videobildsequenz jeweils einmal ausgeführt.

Das in Fig. 2 dargestellte Bild ist in diesem Sinne ein "erstes Bild" eines Bildpaares von unmittelbar aufeinanderfolgenden Bildern der betreffenden Videobildsequenz.

Bei dem hier beschriebenen Ausführungsbeispiel besitzen die Bilder der Videobildsequenz jeweils eine Auflösung von etwa 700 x 500 Pixel, wobei der betreffende Bildsensor für jed en Pixel die Bildhelligkeit einem von insgesamt 256 verschiedenen Bildhelligkeitswerten zuordnet (Graustufenbilder mit einer Farbtiefe von 8 bit). Im beschriebenen Ausführungsbeispiel gibt es beispielsweise Bildhelligkeitswerte von "0" bis "255".

In Fig. 2 sind die Positionen der in Schritt a1) detektierten Merkmalspunkte durch (schwarze und weiße Kreise markiert). Die Bestimmung der Merkmalspunkte kann direkt im Farb- bzw. Grauwertbild geschehen oder auch in davon abgeleiteten Bildern wie z. B. Gradientenbildern, Kantenbildern etc. Bei dieser Bestimmung sollte ein möglichst großer Teil des Bildes abgedeckt werden. Daher wird im dargestellten Beispiel eine Art "Gitternetz" über dem gesamten Bild abgearbeitet. Im Beispiel von Fig. 2 handelt es sich um ein quadratisches 11x8-Gitter. Ganz allgemein ist ein Gitter mit wenigstens 30, insbesondere wenigstens 60 Gitterpunkten bevorzugt.

Ausgehend von den "idealen" Gitterpunkten wird durch einen Softwarealgorithmus die nähere Umgebung dieser Gitterpunkte nach Merkmalspunkten abgesucht, in denen ein relativ großer Kontrast vorliegt. Als "Kontrast" kann z. B. die Differenz zwischen dem größten und dem kleinsten Grauwert im Gebiet des Merkmalspunktes herangezogen werden. Im dargestellten Beispiel werden Merkmalspunkte in Form von 31x31 Pixel-Bildregionen ermittelt. Als Ergebnis des Schrittes a1) werden neben den Merkmalspunkten auch die jeweiligen Positionen dieser Merkmalspunkte (in Bildkoordinaten) gespeichert.

### Schritt a2): Ermittlung der markanten Merkmalspunkte als eine Auswahl aus den in Schritt a1) detektierten Merkmalspunkten, unter Verwendung wenigstens eines vorgegebenen Auswahlkriteriums.

In diesem Schritt wird eine Auswahl aus den zuvor, jeweils in der Nähe eines Gitterpunktes liegenden Merkmalspunkten getroffen. Im dargestellten Beispiel wird anhand eines geeigneten Kriteriums zur Bestimmung einer gewissen Güte der Merkmalspunkte derjenige Anteil der Merkmalspunkte ausgewählt, der dieses Kriterium am Besten erfüllt.

Ein mögliches Gütekriterium ist z. B. ein für jeden in Schritt a1) ermittelten Merkmalspunkt berechnetes quantitatives Maß für den in diesem Merkmalspunkt vorhandenen Kontrast. Das Ergebnis der Anwendung dieses Gütekriteriums ist ebenfalls aus Fig. 2 ersichtlich. Die darin eingezeichneten Schwarzen Kreise markieren die Positionen der in Schritt a2) ausgewählten "markanten Merkmalspunkte" (wohingegen die weißen Kreise die nicht ausgewählten und somit für die nachfolgende Weiterverarbeitung nicht mehr verwendeten (weniger markanten Merkmalspunkte) markieren.

Im einfachsten Fall wird in Schritt a2) ein fest vorgegebener Anteil der in Schritt a1) ermittelten Merkmalspunkte ausgewählt, der beispielsweise im Bereich von 10% bis 50% liegen kann. Im dargestellten Beispiel werden von den in Schritt a1) insgesamt 88 ermittelten Merkmalspunkten in Schritt a2) 27 markante Merkmalspunkte ausgewählt, was einem Anteil von 30% entspricht.

Abweichend vom dargestellten Beispiel kann als ein weiteres (bevorzugt untergeordnetes) Gütekriterium in Schritt a2) auch berücksichtigt werden, dass nach der Auswahl noch ein möglichst großer Teil des Bildes durch die ausgewählten Merkmalspunkte abgedeckt wird und/oder die ausgewählten Merkmalspunkte das gesamte Bild mehr oder weniger gleichmäßig abdecken, um eine starke "Übergewichtung" eines Teilbildbereiches zu vermeiden.

Eine gleichmäßigere Verteilung bekommt man z. B., wenn man fordert, dass in jedem von mehreren vorbestimmten Bildteilen (z. B. Bildquadranten) jeweils ein bestimmter Anteil (z. B. im Bereich von 10% bis 50%, z. B. etwa 30%) markantester Merkmalspunkte ausgewählt wird.

Würde man bei dem Beispiel von Fig. 2 letzteres zusätzliche Gütekriterium einsetzen, so würden z. B. im rechten unteren Teilbildbereich (z. B. rechter unterer Quadrant) mehr Merkmalspunkte als in Fig. 2 (in schwarz) dargestellt ausgewählt werden.

Die Anwendung des Schrittes a2) verbessert die Qualität der Objektdetektion erheblich. Ein weiterer Vorteil besteht darin, dass der für das Verfahren benötigte Rechenaufwand in den folgenden Verarbeitungsschritten reduziert wird.

Die Schritte b1), b2) und b3) bilden zusammen einen "Schritt b)", der dazu dient, eine mathematische Transformation zu ermitteln (schätzungsweise zu berechnen), welche es erlaubt, die beiden Bilder des Bildpaares aufeinander abzubilden, d. h. eine entsprechende Bildkoordinatentransformation bzw. deren Parameter zu ermitteln.

### Schritt b1): Ermittlung von Verschiebungsvektoren für jeden der in Schritt a) ermittelten markanten Merkmalspunkte durch Ermittlung der korrespondierenden markanten Merkmalspunkte in dem anderen der beiden Bilder des Bildpaares.

In diesem Schritt wird zu jedem "markanten Merkmalspunkt" mit einer geeigneten Methode durch einen Softwarealgorithmus die zugehörige Position im "zweiten Bild" des betreffenden Bildpaares (in Bildkoordinaten) ermittelt. Hierfür kann z. B. das zweite Bild in einem gewissen Radius um die im ersten Bild zuvor ermittelten Positionen der markanten Merkmalspunkte nach passenden (d. h. sehr ähnlichen) Merkmalspunkten abgesucht werden. Jede so ermittelte Position im zweiten Bild und die zugehörige Position im ersten Bild definiert für jeden markanten Merkmalspunkt einen "Verschiebungsvektor". Die zugehörige Merkmalsposition im zweiten Bild kann z. B. als Position derjenigen im abgesuchten Radius befindlichen 31x31-Bildregion definiert werden, für welche sich eine maximale Korrelation (mit dem im ersten Bild ermittelten markanten Merkmalspunkt) ergibt.

Der Absuchradius kann beispielsweise fest vorgegeben sein. Falls das Objetdetektionsverfahren im Rahmen einer so genannten Zielverfolgung durchgeführt wird, so kann bei Vorliegen von Informationen aus einer zuvor bereits für ein anderes Bildpaar durchgeführten Objektdetektion gegebenenfalls auf diese Informationen zurückgegriffen werden. Damit kann z. B. der Absuchradius bzw. der abzusuchende Bereich vorteilhaft eingeschränkt werden, um diesen Schritt zu beschleunigen. Insbesondere kann eine solche Absucheinschränkung auf Basis von Verschiebungsvektoren erfolgen, die bei der zuvor an einem anderen Bildpaar durchgeführten Ermittlung resultierten.

Jeder "Verschiebungsvektor" kennzeichnet demnach die translatorische Verschiebung, die ein Merkmalspunkt von einem ersten Bild in das zeitlich darauf folgende zweite Bild erfährt.

Diese in Schritt b1) ermittelten Verschiebungsvektoren sind in der kombinierten Darstellung des ersten Bildes und des zweiten Bildes gemäß Fig. 3 als schwarze Pfeile eingezeichnet. Diese verlaufen jeweils zwischen einem Paar der einander zugeordneten Positionen (weiße Kreise und schwarze Kreise in Fig. 3) der markanten Merkmalspunkte.

### Schritt b2): Ermittlung von im Weiteren zu verwendenden Verschiebungsvektoren als eine Auswahl aus den in Schritt b1) ermittelten Verschiebungsvektoren, anhand wenigstens eines vorgegebenen Auswahlkriteriums.

In diesem Schritt werden aus den in Schritt b1) ermittelten Verschiebungsvektoren anhand geeigneter Gütekriterien mittels eines Softwarealgorithmus Verschiebungsvektoren ausgewählt, die für die nachfolgende Weiterverarbeitung verwendet werden.

Ein bevorzugt zur Anwendung kommendes Gütekriterium ist hierbei so gewählt, dass damit "Ausreißer" eliminiert werden, d. h. Verschiebungsvektoren, deren Betrag und/oder Richtung nicht konsistent zum restlichen Vektorfeld ist. In dem Beispiel von Fig. 3 wird durch Anwendung dieses Gütekriteriums insbesondere der (in Fig. 3 mit einer dünnen Linie eingezeichnete) Verschiebungsvektor eliminiert (d. h. nicht ausgewählt), dessen Richtung und vor allem dessen Betrag nicht konsistent zum restlichen Vektorfeld ist.

Im dargestellten Beispiel sind diese restlichen Verschiebungsvektoren wie aus Fig. 3 ersichtlich nahezu identisch. Dieser Spezialfall des Vektorfeldes ergibt sich z. B. dann, wenn das die Videokamera mitführende Fluggerät die aufgenommene Szenerie in großer Höhe überfliegt, wobei sich im Laufe der Videobildsequenz die Beobachtungsdistanz nur unwesentlich verändert.

Eine ganz andere Art von Vektorfeld würde sich z. B. im Falle einer Koinzidenz von Flugrichtung und Kameraachse (Beobachtungsrichtung) ergeben. In diesem Fall können z. B. Verschiebungsvektoren resultieren, die jeweils in Radialrichtung bezüglich einer Bildmitte von dieser Bildmitte weg gerichtet oder auf diese Bildmitte hin gerichtet sind.

Welcher spezielle Fall jeweils vorliegt, kann für die Ausführung des Schrittes b1) beispielsweise durch eine geeignete Verwendung bzw. Auswertung von Flugnavigationsdaten (und gegebenenfalls Daten betreffend eine aktuelle Schwenkung und/oder Neigung der Kamera) berücksichtig werden. Alternativ oder zusätzlich kommt in Betracht, für die Ermittlung von den im Weiteren zu verwendenden Verschiebungsvektoren in Schritt b2) zunächst das gesamte Vektorfeld (Gesamtheit der in Schritt b1) ermittelten Verschiebungsvektoren) einer Auswertung zu unterziehen, um das in Schritt b2) verwendete Auswahlkriterium in Abhängigkeit von dem Ergebnis dieser vorherigen Auswertung vorzugeben.

Wenn eine solche Auswertung beispielsweise das vorstehend erwähnte Vektorfeld mit "radialen Verschiebungsvektoren" ergibt, so kann für die erwähnte Eliminierung von "Ausreißern" vorgesehen werden, dass jeder in Schritt b1) ermittelte Verschiebungsvektor mit einem für die jeweilige Position (auf Basis der Auswertung) zu erwartenden Verschiebungsvektor verglichen und gegebenenfalls (bei zu großer Abweichung) als Ausreißer eliminiert wird.

### Schritt b3): Berechnung der mathematischen Transformation auf Basis der in Schritt b2) ausgewählten Verschiebungsvektoren.

Mithilfe der zuvor ausgewählten Verschiebungsvektoren wird eine mathematische Transformation von Bildkoordinaten des ersten Bildes auf Bildkoordinaten des zweiten Bildes berechnet.

Hierfür kann z. B. eine volle Homographie geschätzt werden, oder können z. B. nur einzelne Parameter einer Transformation bestimmt werden (nur Translation in horizontaler und/oder vertikaler Bildrichtung). Hierfür kann z. B. auf Softwarealgorithmen zurückgegriffen werden, die aus dem Stand der Technik an sich bekannt sind. Bevorzugt wird eine längentreue Transformation berechnet.

Die Schritte c1) und c2) dienen dazu, ein "Differenzbild" als eine Differenz zwischen den in Schritt b) ermittelten Transformation aufeinander transformierten Bilder des Bildpaares zu ermitteln.

### Schritt c1): Anwendung der mathematischen Transformation zum Aufeinandertransformieren der beiden Bilder des Bildpaares.

In diesem Schritt wird das erste Bild mithilfe der zuvor berechneten mathematischen Transformation auf Bildkoordinaten des zweiten Bildes transformiert. Dabei ergibt sich ein Koordinatenbereich, in dem sich beide Bilder überlappen. In Fig. 3 sind die Umrandungen der beiden Bilder jeweils als schwarze Linie eingezeichnet.

### Schritt c2): Ermittlung des Differenzbildes durch eine pixelweise Subtraktion von Bildhelligkeitswerten der beiden Bilder.

In diesem Schritt wird z. B. das transformierte erste Bild im Überlappungsbereich vom zweiten Bild subtrahiert. Daraus ergibt sich im dargestellten Ausführungsbeispiel ein Differenzbild, welches entsprechend des Ausmaßes der Verschiebung der beiden einzelnen Bilder zueinander etwas weniger Pixel als jedes der beiden einzelnen Bilder aufweist. Die Farbtiefe des Differenzbildes ist gegenüber der Farbtiefe der beiden einzelnen Bilder jedoch vergrößert. Für das Beispiel einer Farbtiefe der einzelnen Bilder von 8 bit entsteht das Differenzbild mit einer Farbtiefe von etwa 9 bit.

Das so berechnete Differenzbild wird gespeichert.

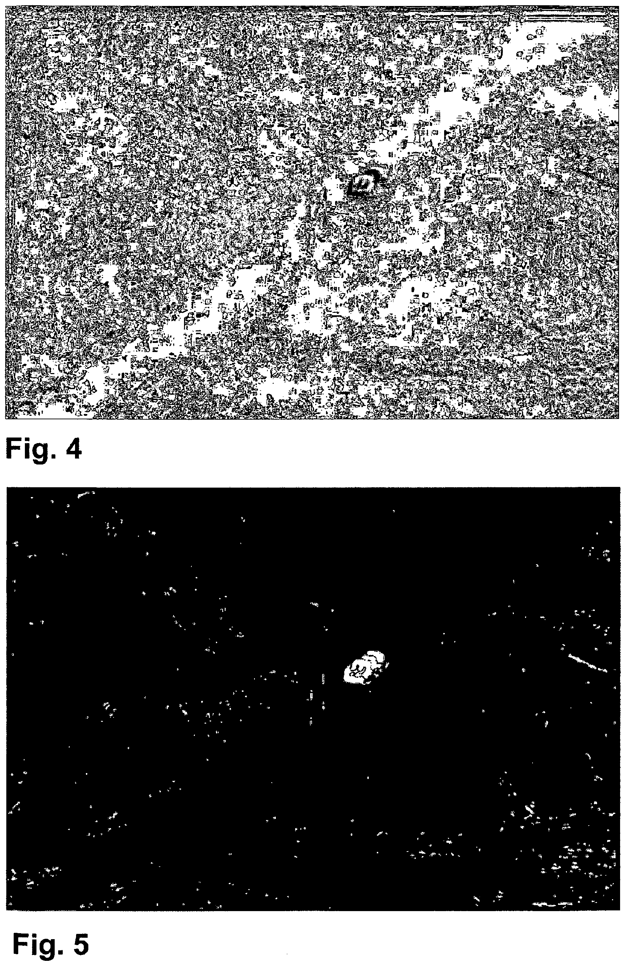

Das im vorliegenden Beispiel sich ergebende Differenzbild ist in Fig. 4 veranschaulicht. In Fig. 4 sind die Pixel mit Bildhelligkeitswerten im Bereich um 0 grau, die Pixel mit demgegenüber positiveren Bildhelligkeitswerten heller (bis hin zu weiß) und die Pixel mit negativeren Bildhelligkeitswerten dunkler (bis hin zu schwarz) dargestellt.

Die Schritte d1), d2) und d3) dienen dazu, aus dem in Schritt c) ermittelten Differenzbild "markante Bildänderungspunkte" zu ermitteln.

### Schritt d1): Festlegung eines Bildänderungsschwellwertes und Ermittlung von Bildänderungspunkten als diejenigen Stellen in dem in Schritt c) ermittelten Differenzbild, deren Bildhelligkeitsabsolutwert den Bildänderungsschwellwert überschreitet.

Im dargestellten Beispiel werden die einzelnen Bilder der Videobildsequenz mit einer Farbtiefe von 8 bit, entsprechend 256 möglichen verschiedenen Grauwerten aufgenommen. Bei einer Codierung dieser Grauwerte mit den Werten von "0" bis "255" ergibt sich im Falle einer einfachen mathematischen Subtraktion für die Ermittlung des Differenzbildes im Schritt c2) im Differenzbild eine Grauwertskala mit möglichen Grauwerten von "-255" bis "+255". Bei der erstmaligen Ausführung des Schrittes d1) kann der Bildänderungsschwellwert z. B. als ein etwa in der Mitte der Grauwertskala der Einzelbilder des Bildpaares liegend gewählt werden, also im beschriebenen Beispiel mit einem Wert von etwa 128 vorgegeben werden.

Alternativ kommt z. B. in Betracht, den anfänglich in Schritt d1) festgelegten Bildänderungsschwellwert in Abhängigkeit von den im Differenzbild (tatsächlich) vorkommenden Bildhelligkeitswerten zu berechnen.

Sodann werden die Absolutwerte der Bildhelligkeitswerte des Differenzbildes Pixel für Pixel mit diesem Bildänderungsschwellwert verglichen. Für alle Bildpositionen (Pixel) im Differenzbild, deren Bildhelligkeitsabsolutwert nicht größer als der Bildhelligkeitsschwellwert ist, wird z. B. eine "0" und für alle Bildpositionen, deren Bildhelligkeitsabsolutwert den Bildänderungsschwellwert überschreitet eine "1" in ein im Schritt d1) erzeugtes "Bildänderungsbild" (Binärbild) eingetragen. In diesem Bildänderungsbild entsprechen demnach diejenigen Bereiche, die mit "1" markiert sind, den in Schritt d1) ermittelten Bildänderungspunkten.

Das sich im vorliegenden Beispiel nach erstmaliger Ausführung des Schrittes d1) ergebende Bildänderungsbild ist in Fig. 5 dargestellt. Die Bildänderungen, d. h. Bildbereiche mit Pixelwert "1", sind in Fig. 5 weiß dargestellt, und die Bildbereiche mit dem Pixelwert "0" in schwarz.

### Schritt d2): Analyse der Qualität der im Schritt d1) ermittelten Bildänderungspunkte anhand wenigstens eines vorgegebenen Qualitätskriteriums.

In diesem Schritt werden bestimmte Merkmale der im Bildänderungsbild enthaltenen Bildänderungen "gemessen" und einer Auswertung anhand wenigstens eines vorgegebenen Qualitätskriteriums unterzogen.

Im Hinblick auf die Vermeidung von Falschalarmen bei dem erfindungsgemäßen Detektionsverfahren kommt hierbei insbesondere z. B. eine Analyse dahingehend in Betracht, wie viele "isoliert" im Bildänderungsbild liegende Bildänderungen, d. h. Pixel mit dem Wert "1" es gibt. Mit dem Begriff "isoliert" kann insbesondere der Fall gemeint sein, dass alle im Bildänderungsbild direkt benachbarten 8 Nachbarpixel den Wert "0" besitzen. Da solche isolierten Bildänderungen in der Regel als (z. B. durch Bildrauschen etc. bedingte) Artefakte zu betrachten sind, kann ein in Schritt d2) verwendetes Qualitätskriterium insbesondere vorsehen, dass die Qualität der ermittelten Bildänderungspunkte als umso besser bewertet wird (bzw. ein entsprechendes Qualitätskriterium erfüllt ist), je weniger solche isolierte Bildänderungen vorhanden sind.

Alternativ oder zusätzlich kann auch ein Qualitätskriterium verwendet werden, welches die Qualität des Bildänderungsbildes auch dann als umso schlechter bewertet, je mehr "aus sehr wenigen (z. B. bis zu einer Maximalanzahl) zusammenhängenden Pixeln gebildete Bildbereiche mit Bildhelligkeitswert 1" existieren. Auch solche Bildänderungen sind in der Regel als Artefakte zu betrachten. Eine hierfür geeignete Maximalanzahl kann z. B. in Abhängigkeit von der Gesamtanzahl von Pixeln der einzelnen Bilder gewählt werden. Beispielsweise kann die Maximalanzahl als ein bestimmter Prozentsatz der Gesamtpixelanzahl gewählt werden.

Ferner können die beiden vorstehend genannten Qualitätskriterien auch dahingehend modifiziert werden, dass das Vorliegen einer "Isolation" nicht den Wert 0 für sämtliche direkte Nachbarpixel voraussetzt, sondern hierfür eine vorbestimmte Mindestanzahl direkter Nachbarpixel ausreichend ist (z. B. mindestens 4, 5 oder 6 Nachbarpixel).

### Schritt d3): falls das Qualitätskriterium erfüllt ist, Festlegung der in Schritt d1) ermittelten Bildänderungspunkte als die im Schritt d) ermittelten markanten Bildänderungspunkte, sonst Wiederholung der Schritte d1) und d2) mit einem verändert festgelegten Bildänderungsschwellwert.

Falls das oder die in Schritt d2) verwendeten Qualitätskriterien erfüllt sind, so schreitet die Verarbeitung weiter zum Schritt e). Andernfalls, wenn also das oder die Qualitätskriterien nicht erfüllt sind, wobei einzelne oder alle solcher Kriterien gegebenenfalls auch durch eine Benutzereingabe veränderbar vorgesehen sein können, so schreitet die Verarbeitung zurück zum Schritt d1), wobei bei einer solchen Wiederholung des Schrittes d1) jedoch ein anders festgelegter Bildänderungsschwellwert verwendet wird. Der bei der Berechnung der Bildänderungen, die wieder an dem (unveränderten) Differenzbild durchgeführt wird, eingesetzte Bildänderungsschwellwert wird also entsprechend dem Ergebnis der Analyse von Schritt d2) neu eingestellt. Dies mit dem Ziel einer Erfüllung des bzw. der Qualitätskriterien (oder zumindest einer "besseren Erfüllung" dieser Kriterien) bei der wiederholten Ausführung der Schritte d1) und d2).

Falls beispielsweise die Qualitätsanalyse in dem vorausgegangenen Schritt d2) ergeben hat, dass die Qualität unter einer vorgegebenen Akzeptanzgrenze liegt, so wird bei der Wiederholung der Schritte d1) und d2) der Bildänderungsschwellwert erhöht (so dass die Empfindlichkeit der Ermittlung von Bildänderungspunkten in Schritt d1) entsprechend reduziert wird). Umgekehrt, falls die Bewertung der Qualität zu einem Ergebnis führt, welches die vorgegebene Akzeptanzgrenze um ein gewisses (z. B. fest oder variabel vorgegebenes) Ausmaß übersteigt, so kann eine Wiederholung der Schritte d1) und d2) mit einem verringerten Bildänderungsschwellwert durchgeführt werden (d. h. mit einer erhöhten Empfindlichkeit für die Ermittlung von Bildänderungspunkten).

Der Einsatz der Schritte d1), d2) und d3) ermöglicht somit vorteilhaft eine iterative Verbesserung der Qualität der in Schritt d1) ermittelten Bildänderungspunkte bzw. des hierbei ermittelten Bildänderungsbildes.

Nach Abschluss dieser Optimierung schreitet die Verarbeitung zum Schritt e). Für den Fall, dass eine solche iterative Optimierung scheitert, was z. B. in dem Fall angenommen werden kann, in welchem eine vorbestimmte Maximalanzahl an Wiederholungen der Schritte d1) und d2) erreicht wurde (ohne akzeptable Qualitätsverbesserung), kann der aus den Schritten d1), d2) und d3) bestehende Verarbeitungsteil auch als ergebnislos abgebrochen werden, was wiederum zu einem ergebnislosen Abbruch des gesamten Objektdetektionsverfahrens für das betreffende Bildpaar führt.

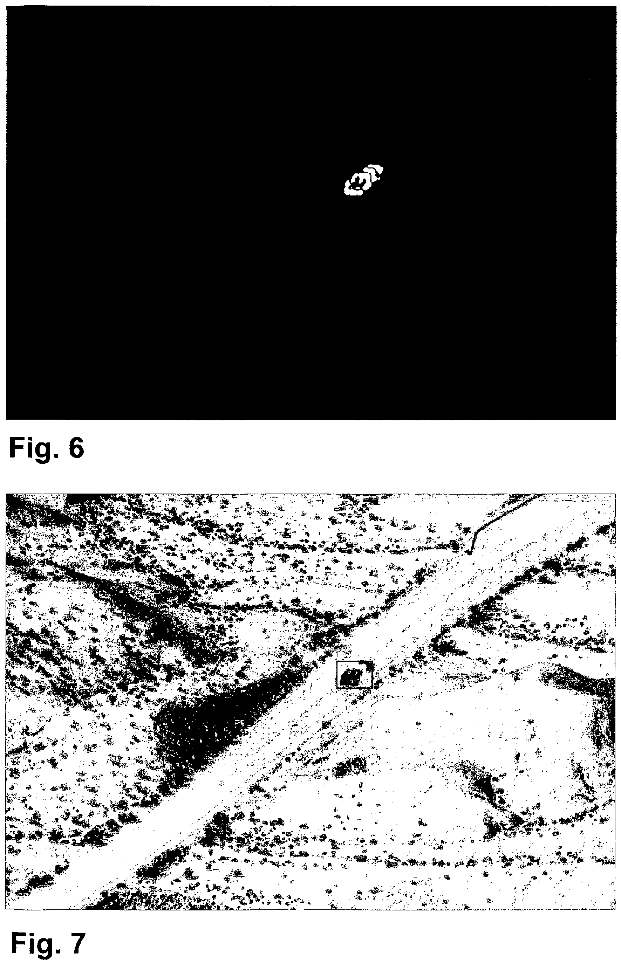

Im hier beschriebenen Beispiel resultiert aus dieser iterativen Qualitätsverbesserung das in Fig. 6 dargestellte Bildänderungsbild. Wie in Fig. 6 erkennbar, sind nurmehr relativ große zusammenhängende, und nahe einander benachbarte Bildänderungen enthalten, die offensichtlich durch ein an dieser Stelle im Bild befindliches bewegtes Objekt hervorgerufen wurden.

### Schritt e): Ermittlung von Objektpunkten aus den in Schritt d) ermittelten Bildänderungspunkten,

In diesem Schritt werden mit einer geeigneten Methode in programmgesteuerter Weise aus den verbleibenden, d. h. im zuletzt berechneten Bildänderungsbild (Fig. 6) befindlichen Bildänderungen die bewegten Objekte ermittelt.

In diesem Schritt können z. B. relativ nahe einander benachbarte (z. B. näher als eine fest vorgegebene oder per Benutzereingabe vorgebbare Maximaldistanz) und jeweils eine gewisse Mindestgröße (z. B. größer als eine fest vorgegebene oder per Benutzereingabe vorgebbare Mindestgröße) aufweisende Bildänderungen als einem bestimmten (bewegten) Objekt zugeordnet betrachtet werden. Dementsprechend führt diese Objektpunktermittlung von Schritt e) im dargestellten Beispiel zum Ergebnis, dass auf Basis des betreffenden Bildpaares ein bewegtes Objekt (in den Figuren etwa in der Bildmitte erkennbar) detektiert wird.

Fig. 7 zeigt das "zweite Bild" dieses Bildpaares, wobei darin ein auf Basis des Ergebnisses von Schritt e) ein Positionsrahmen die Position und Größe des detektierten bewegten Objekts markiert.

Es versteht sich, dass das vorstehend beispielhaft beschriebene Verfahren sodann auf weitere Bildpaare der Videobildsequenz angewendet werden kann, wobei das "erste Bild" eines solchen nachfolgend zu verarbeitenden Bildpaares das "zweite Bild" des zuvor verarbeiteten Bildpaares sein kann.

Das beschriebene Objektdetektionsverfahren kann besonders vorteilhaft im Rahmen einer Zielerfassung bzw. Zielverfolgung verwendet werden, wobei im Falle von mehreren erfassten bewegten Objekten jedem Objekt bevorzugt eine bestimmte Identifizierung zugeordnet wird.

## Patentansprüche

1. Verfahren zur Detektion bewegter Objekte in einer Videobildsequenz, umfassend die Schritte:
a) Ermittlung von markanten Merkmalspunkten in einem Bild eines Paares von aufeinanderfolgenden Bildern der Videobildsequenz,
b) Ermittlung einer mathematischen Transformation zur Abbildung eines der beiden Bilder des Bildpaares auf das andere der beiden Bilder des Bildpaares, unter Verwendung der in Schritt a) ermittelten markanten Merkmalspunkte,
c) Ermittlung eines Differenzbildes als eine Differenz zwischen den mittels der in Schritt b) ermittelten Transformation aufeinander transformierten Bilder des Bildpaares,
d) Ermittlung von markanten Bildänderungspunkten in dem in Schritt c) ermittelten Differenzbild,
e) Ermittlung von Objektpunkten aus den in Schritt d) ermittelten markanten Bildänderungspunkten, wobei der Schritt d) folgende Schritte umfasst:
d1) Festlegung eines Bildänderungsschwellwertes und Ermittlung von Bildänderungspunkten als diejenigen Stellen in dem in Schritt c) ermittelten Differenzbild, deren Bildhelligkeitsabsolutwert den Bildänderungsschwellwert überschreitet,
d2) Analyse der Qualität der im Schritt d1) ermittelten Bildänderungspunkte anhand wenigstens eines vorgegebenen Qualitätskriteriums,
d3) falls das Qualitätskriterium erfüllt ist, Festlegung der in Schritt d1) ermittelten Bildänderungspunkte als die im Schritt d) ermittelten markanten Bildänderungspunkte, sonst Wiederholung der Schritte d1) und d2) mit einem verändert festgelegten Bildänderungsschwellwert.

2. Verfahren nach Anspruch 1 wobei der Schritt a) folgende Schritte umfasst:
a1) Detektion von Merkmalspunkten in einem der beiden Bilder des Bildpaares, jeweils in der Nähe von Gitterpunkten eines vorab festgelegten, über dieses Bild gelegten Gitters,
a2) Ermittlung der markanten Merkmalspunkte als eine Auswahl aus den in Schritt a1) detektierten Merkmalspunkten, unter Verwendung wenigstens eines vorgegebenen Auswahlkriteriums.

3. Verfahren nach einem der vorangehenden Ansprüche, wobei der Schritt b) folgende Schritte umfasst:
b1) Ermittlung von Verschiebungsvektoren für jeden der in Schritt a) ermittelten markanten Merkmalspunkte durch Ermittlung der korrespondierenden markanten Merkmalspunkte in dem anderen der beiden Bilder des Bildpaares,
b2) Ermittlung von im Weiteren zu verwendenden Verschiebungsvektoren als eine Auswahl aus den in Schritt b1) ermittelten Verschiebungsvektoren, anhand wenigstens eines vorgegebenen Auswahlkriteriums,
b3) Berechnung der mathematischen Transformation auf Basis der in Schritt b2) ausgewählten Verschiebungsvektoren.

4. Verfahren nach einem der vorangehenden Ansprüche, wobei der Schritt c) folgende Schritte umfasst:
c1) Anwendung der mathematischen Transformation zum Aufeinandertransformieren der beiden Bilder des Bildpaares,
c2) Ermittlung des Differenzbildes durch eine pixelweise Subtraktion von Bildhelligkeitswerten der beiden Bilder.

5. Verfahren nach einem der vorangehenden Ansprüche, wobei der anfänglich in Schritt d1) festgelegte Bildänderungsschwellwert in Abhängigkeit von den im Differenzbild vorkommenden Bildhelligkeitswerten berechnet wird.

6. Verfahren nach einem der vorangehenden Ansprüche, wobei in Schritt d2) als Qualitätskriterium verwendet wird, dass die Anzahl von Bildänderungspunkten in Form von isolierten Pixeln im Differenzbild eine vorgegebene Maximalanzahl nicht übersteigt.

7. Verfahren nach einem der vorangehenden Ansprüche, wobei das in Schritt d2) verwendete Qualitätskriterium durch eine Benutzereingabe veränderbar ist.

8. Verfahren nach einem der vorangehenden Ansprüche, wobei in Schritt e) die Objektpunkte jeweils als Bildbereiche von nahe beieinander liegenden der in Schritt d) ermittelten Bildänderungspunkte ermittelt werden.

9. Vorrichtung zur Durchführung eines Verfahrens nach einem der vorangehenden Ansprüche, umfassend eine bildgebende Sensoreinrichtung zur Erzeugung der Videobildsequenz und eine programmgesteuerte Rechnereinrichtung zur Durchführung der Schritte a) bis e).

## Claims

1. Method for detecting moving objects in a video image sequence, comprising the following steps:
a) Determining distinctive feature points in one image of a pair of successive images of the video image sequence,
b) Determining a mathematical transformation for mapping one of the two images of the image pair onto the other of the two images of the image pair, using the distinctive feature points determined in step a),
c) Determining a difference image at a difference between the images of the image pair that have been transformed onto one another by means of the transformation determined in step b),
d) Determining distinctive image change points in the difference image determined in step c),
e) Determining object points from the distinctive image change points determined in step d),
wherein step d) comprises the following steps:
d1) Defining an image change threshold value and determining image change points as those locations in the difference image determined in step c) whose image brightness absolute value exceeds the image change threshold value,
d2) Analysing the quality of the image change points determined in step d1) on the basis of at least one predefined quality criterion,
d3) If the quality criterion is satisfied, defining the image change points determined in step d1) as the distinctive image change points determined in step d), otherwise repeating steps d1) and d2) with an image change threshold value defined in an altered manner.

2. Method according to Claim 1, wherein step a) comprises the following steps:
a1) Detecting feature points in one of the two images of the image pair, in each case in the vicinity of grid points of a predefined grid placed over said image,
a2) Determining the distinctive feature points as a selection from the feature points detected in step a1), using at least one predefined selection criterion.

3. Method according to either of the preceding claims, wherein step b) comprises the following steps:
b1) Determining displacement vectors for each of the distinctive feature points determined in step a) by determining the corresponding distinctive feature points in the other of the two images of the image pair,
b2) Determining displacement vectors to be used thereafter as a selection from the displacement vectors determined in step b1), on the basis of at least one predefined selection criterion,
b3) Calculating the mathematical transformation on the basis of the displacement vectors selected in step b2).

4. Method according to any of the preceding claims, wherein step c) comprises the following steps:
c1) Applying the mathematical transformation for transforming the two images of the image pair onto one another,
c2) Determining the difference image by pixel-by-pixel subtraction of image brightness values of the two images.

5. Method according to any of the preceding claims, wherein the image change threshold value initially defined in step d1) is calculated depending on the image brightness values occurring in the difference image.

6. Method according to any of the preceding claims, wherein the quality criterion used in step d2) is that the number of image change points in the form of isolated pixels in the difference image does not exceed a predefined maximum number.

7. Method according to any of the preceding claims, wherein the quality criterion used in step d2) is able to be altered by a user input.

8. Method according to any of the preceding claims, wherein in step e), the object points are determined in each case as image regions of image change points lying close together from among the image change points determined in step d).

9. Apparatus for carrying out a method according to any of the preceding claims, comprising an imaging sensor device for generating the video image sequence and a program-controlled computer device for carrying out steps a) to e).

## Revendications

1. Procédé de détection d'objets en mouvement dans une séquence d'images vidéo comprenant les étapes suivantes :
a) la détection de points caractéristiques distinctifs dans une image d'une paire d'images successives de la séquence d'images vidéo,
b) la détermination d'une transformation mathématique pour projeter l'une des deux images de la paire d'images sur l'autre des deux images de la paire d'images en utilisant les points caractéristiques distinctifs déterminés à l'étape a),
c) la détermination d'une image de différence comme étant la différence entre les images de la paire d'images qui sont transformées l'une en l'autre au moyen de la transformation déterminée à l'étape b),
d) la détermination de points de modification d'image distinctifs dans l'image de différence déterminée à l'étape c),
e) la détermination de points d'objets parmi les points de modification d'image distincts déterminés à l'étape d),
dans lequel l'étape d) comprend les étapes suivantes :
d1) la détermination d'une valeur de seuil de modification d'image et la détermination de points de modification d'image comme étant les emplacements de l'image de différence déterminée à l'étape c) dont la valeur absolue de luminosité d'image dépasse la valeur de seuil de modification d'image,
d2) l'analyse de la qualité des points de modification d'image déterminés à l'étape d1) sur la base d'au moins un critère de qualité prédéterminé,
d3) si le critère de qualité est satisfait, l'obtention des points de modification d'image déterminés à l'étape d1) comme étant les points de modification d'image distinctifs déterminés à l'étape d), sinon la répétition des étapes d1) et d2) en modifiant la valeur de seuil de modification d'image déterminée.

2. Procédé selon la revendication 1, dans lequel l'étape a) comprend les étapes suivantes :
a1) la détection de points caractéristiques dans l'une des deux images de la paire d'images, respectivement à proximité des points de quadrillage d'un quadrillage prédéfini placé sur ladite image,
a2) la détermination des points caractéristiques distinctifs comme étant une sélection parmi les points caractéristiques détectés à l'étape a1), en utilisant au moins un critère de sélection prédéterminé.

3. Procédé selon l'une des revendications précédentes, dans lequel l'étape b) comprend les étapes suivantes :
b1) la détermination de vecteurs de déplacement pour chacun des points caractéristiques distinctifs déterminés à l'étape a) en déterminant les points caractéristiques distinctifs correspondants dans l'autre des deux images de la paire d'images,
b2) la détermination de vecteurs de déplacement à utiliser comme étant une sélection parmi les vecteurs de déplacement déterminés à l'étape b1), en utilisant au moins un critère de sélection prédéterminé,
b3) le calcul de la transformation mathématique sur la base des vecteurs de déplacement sélectionnés à l'étape b2).

4. Procédé selon l'une des revendications précédentes, dans lequel l'étape c) comprend les étapes suivantes :
c1) l'application de la transformation mathématique pour transformer l'une en l'autre les deux images de la paire d'images,
c2) la détermination de la différence d'image par une soustraction pixel par pixel de valeurs de luminosité d'image des deux images.

5. Procédé selon l'une des revendications précédentes, dans lequel la valeur de seuil de modification d'image initialement déterminée à l'étape d1) est calculée en fonction des valeurs de luminosité d'image apparaissant dans l'image de différence.

6. Procédé selon l'une des revendications précédentes, dans lequel le fait que le nombre de points de modification d'image sous forme de pixels isolés dans l'image de différence ne dépasse pas un nombre maximal prédéterminé est utilisé à l'étape d2) en tant que critère de qualité.

7. Procédé selon l'une des revendications précédentes, dans lequel le critère de qualité utilisé à l'étape d2) peut être modifié par une entrée provenant de l'utilisateur.

8. Procédé selon l'une des revendications précédentes, dans lequel, à l'étape e), les points d'objets sont déterminés comme étant des zones d'image de points proches les uns des autres parmi les points de modification d'image déterminés à l'étape d).

9. Appareil permettant de mettre en oeuvre un procédé selon l'une des revendications précédentes, comprenant un dispositif capteur d'image destiné à générer la séquence d'images vidéo et un dispositif informatique commandé par programme destiné à mettre en oeuvre les étapes a) à e).
